(19) Europäisches Patentamt
European Patent Office
Office européen des brevets

(11) **EP 4 037 874 B1**

(12) **EUROPEAN PATENT SPECIFICATION**

(45) Date of publication and mention of the grant of the patent:
**01.11.2023 Bulletin 2023/44**

(21) Application number: **20797847.9**

(22) Date of filing: **28.09.2020**

(51) International Patent Classification (IPC):
**B25J 9/00** (2006.01)   **B25J 9/06** (2006.01)
**B25J 9/10** (2006.01)

(52) Cooperative Patent Classification (CPC):
**B25J 9/0006; B25J 9/06; B25J 9/102**

(86) International application number:
**PCT/IB2020/059049**

(87) International publication number:
**WO 2021/064544 (08.04.2021 Gazette 2021/14)**

(54) **KINEMATIC CHAIN TO ASSIST FLEXION-EXTENSION OF A JOINT**

KINEMATISCHE KETTE ZUR UNTERSTÜTZUNG DER BEUGUNG UND STRECKUNG EINES GELENKS

CHAÎNE CINÉMATIQUE POUR ASSISTER LA FLEXION-EXTENSION D'UNE ARTICULATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2019 IT 201900017558**

(43) Date of publication of application:
**10.08.2022 Bulletin 2022/32**

(73) Proprietor: **Scuola Superiore di Studi Universitari e di Perfezionamento Sant'Anna**
**56127 Pisa (IT)**

(72) Inventors:
• **VITIELLO, Nicola**
  **56025 Pontedera (PI) (IT)**
• **BALDONI, Andrea**
  **56025 Pontedera (PI) (IT)**
• **CREA, Simona**
  **55100 Lucca (IT)**
• **SCALAMOGNA, Antonio**
  **33100 Udine (IT)**
• **FIUMALBI, Tommaso**
  **56025 Pontedera (IT)**

(74) Representative: **ABM Agenzia Brevetti & Marchi**
**Viale Giovanni Pisano, 31**
**56123 Pisa (IT)**

(56) References cited:
**EP-A1- 0 090 054     WO-A2-2014/033613**
**US-A- 5 437 490**

## Description

Field of the invention

The present invention relates to the field of robotic exoskeletons for orthopedic rehabilitation.

In particular, the invention relates to a modular kinematic chain for assisting the movement of an anatomical joint.

Description of the prior art

In the wearable robotics sector, the need is increasingly felt to find a simple and efficient architecture to create exoskeletons to assist in the movement of anatomical joints, such as the set of phalanges that make up the finger of the hand.

To date, although there are numerous exoskeletons that deal with the issue of mobilization, the still very important technical problem concerns the size and weight of these devices, which prevent a truly natural movement experience for the user.

Furthermore, exoskeletons for assisting joints such as those of the hand are very complex from the kinematic point of view, because they must have a rotational effect on the anatomical joints through a kinematics that is not aligned with the joint, but rather disposed above or sideways. This frequently leads to the undesirable generation of parasitic force on the bone segments, which lower the comfort of use and the effectiveness in handling assistance.

It is therefore of great importance to find a kinematic chain with little lateral encumbrance able to follow the flexion-extension movement of the hand well, accompanying and assisting the movement.

In WO2014033613 an exoskeletal device is proposed for assisting the movement of a metacarpal-phalangeal joint of a hand, comprising a metacarpal support, a phalangeal support and a kinematic chain between the metacarpal support and the phalangeal support. This kinematic chain in turn comprises a metacarpal sled, a rigid link rotatably connected to the metacarpal sled by means of a first rotoidal constraint, a second rotoidal constraint between the rigid link and the phalangeal support, and actuation means for imposing a first rotation on the rigid link and a second rotation to the support.

However, this solution has a high stiffness, resulting in both a low adaptability to the anthropometric dimensions of the user, and the generation of parasitic constraining forces on the phalanges due to the fact that the exoskeleton is unable to faithfully follow the movement of the rotation axes of the anatomical joints during finger flexion-extension.

Examples of kinematic chains are shown in EP0090054A1 and US5437490A.

Summary of the invention

It is therefore a feature of the present invention to provide a kinematic chain for assisting the movement of an anatomical articulation that allows to faithfully follow the movement of the rotation axes of the anatomical joints during the movement of the joint itself. A kinematic chain according to the invention is defined in claim 1.

It is also a feature of the present invention to provide such a kinematic chain that allows to adapt to different anthropometric measurements of the user not known a priori.

It is still a feature of the present invention to provide such a kinematic chain that has limited bulk and weight with respect to prior art solutions.

It is a further feature of the present invention to provide such a kinematic chain that allows one or more modules to be placed in series to adapt to different joints and medical conditions.

These and other objects are achieved by a kinematic chain for assisting the movement of an anatomical articulation according to claims from 1 to 11.

Such solution allows to place in series a number n of rotating elements that can be varied according to the specific use and the type of articulation to be assisted.

For example, in a basic configuration, it is possible to use a single rotating element (n = 1) and a roto-translation constraint between the elongated element and the end element. In this case, between the end element and the frame, i.e. between the two engagement portions constrained to the anatomical portions upstream and downstream of the articulation, there is a roto-translation constraint in which the displacement of the instantaneous center of rotation between the elongated element and the frame and the translation between the elongated element and the terminal element allow the correct alignment of the kinematic chain with the anatomical portions, allowing free movement of the articulation without having parasitic forces discharged on the articulation itself, up to a certain value of the rotation of the anatomical joint.

In case that the anatomical joint must perform a greater rotation, it is possible to increase the number of rotating elements ($n \geq 3$) and, if necessary, to remove the roto-translation constraint between the elongated element and the end element.

Furthermore, depending on the distance between the anatomical portions upstream and downstream of the articulation and the maximum angle to be achieved, it is possible to use rotating elements that have different values of $r_i$ and $r_i'$, so as to vary the relative rotation that each rotating element performs with respect to the previous element.

The kinematic chain according to the present invention, therefore, allows to provide assistance by adapting to any type of joint and anthropometric measurement, without generating parasitic constraint reactions on the patient's articulations.

Furthermore, the actuation of the kinematic chain can be made by means of a system of cables and pulleys, or by the actuation of a single rotating element.

In particular, in the event that the transmission of motion between the elements of the chain is achieved by means of toothed profiles, the actuation can be achieved by engaging an actuator with a rotating element.

A further advantage of the present invention resides in the fact that it is possible to place a plurality of kinematic modules in series, by means of roto-translation constraints, to assist all the articulations of a polyarticular joint, such as, for example, a finger or the vertebral column.

Brief description of the drawings

Further characteristic and/or advantages of the present invention are more bright with the following description of an exemplary embodiment thereof, exemplifying but not limitative, with reference to the attached drawings in which:

- Fig. 1 schematically shows the operating principle of a module of the kinematic chain, according to the present invention, in the case $r_0' = r_i = r_i'$;
- Fig. 2 schematically shows the operating principle of a module of the kinematic chain, according to the present invention, in the case $r_0' = r_i'$ and $r_i < r_i'$;
- Figs. 3A and 3B schematically show the opposite sides of a possible embodiment of a module of the kinematic chain, according to the present invention, where the profiles of the rotating elements, of the frame and of the elongated element are toothed profiles arranged to mesh with each other;
- Fig. 4 shows the embodiment of Figs. 3A and 3B with non-zero relative rotations;
- Figs. 5A and 5B show the opposite sides of a possible embodiment of a module of the kinematic chain, according to the present invention, in which an actuation system comprising a cable and 3 pulleys is also shown;
- Fig. 6 shows a perspective view of the embodiment of Figs. 5A and 5B;
- Fig. 6A shows a detail of Fig. 6;
- Figs. 7A and 7B show the opposite sides of a possible embodiment of a module of the kinematic chain, according to the present invention, in which rotating redundancy elements are provided;
- Fig. 8 shows a perspective view of the embodiment of Figs. 7A and 7B wherein an end element of a first module is made integral with the frame of a second module to place the two modules in series;
- Fig. 8A shows a detail of Fig. 8;
- Fig. 9 shows an embodiment of the kinematic chain, according to the present invention, wherein three kinematic modules are placed in series by means of the coupling system shown in Figs. 8 and 8A.

Description of a preferred exemplary embodiment

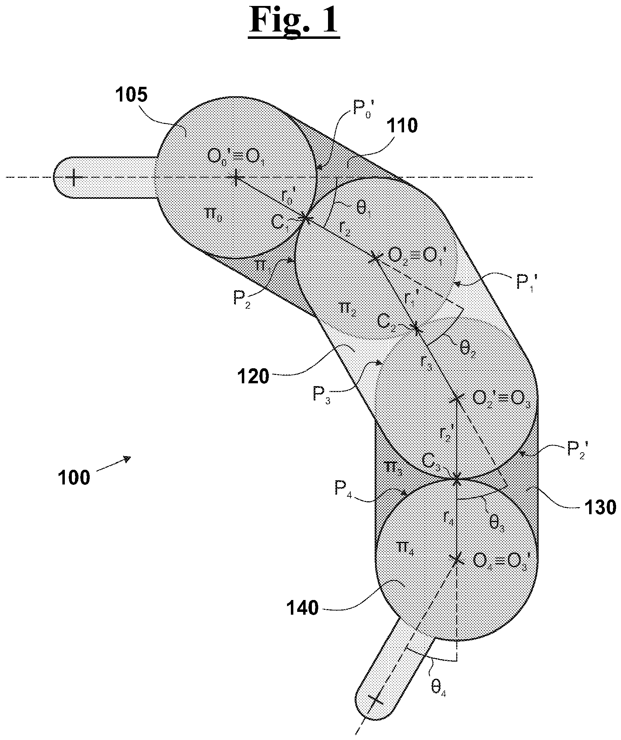

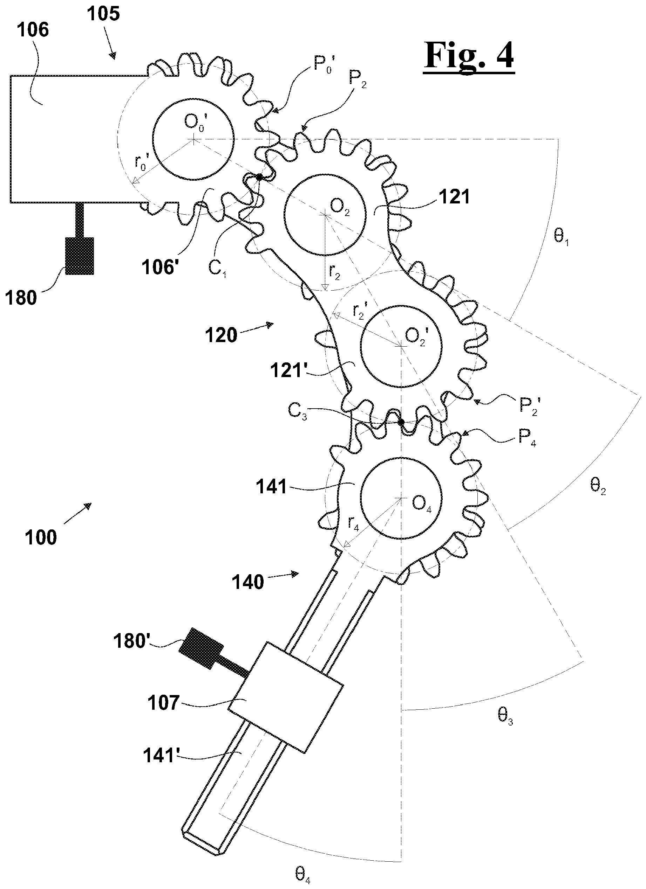

With reference to Figs. 1, 2, 3 and 4, the kinematic chain for assisting the movement of an anatomical articulation comprises at least one kinematic module 100 comprising a frame 105 having a first end 106, comprising a first engaging portion 180 arranged to be integrally connected to a proximal anatomical portion with respect to the articulation, and a second end 106' comprising a profile $P_0'$ and a centre of rotation $O_0'$.

The kinematic module 100 then comprises a number $n$ of rotating elements, defined by an index $i = 1,...,n$. Each $i$-th rotating element has a first end, comprising a profile $P_i$ and a centre of rotation $O_i$, and a second end, comprising a profile $P_i'$ and a centre of rotation $O_i'$.

The kinematic module 100 also comprises an elongated element 140 having a first end 141 comprising a profile $P_{n+1}$ and a centre of rotation $O_{n+1}$. The elongated element 140 is constrained at one end element 107 comprising a second engaging portion 180' arranged to be integrally connected to a distal anatomical portion with respect to the articulation.

In particular, Figs. 1, 2, 3 and 4 show the solution with **n = 3**. Therefore:

- the rotating element **i = 1** corresponds to the rotating element 110 and comprises a first end 111, comprising a profile $P_1$ and a centre of rotation $O_1$, and a second end 111', comprising a profile $P'_1$ and a centre of rotation $O'_1$ ;
- the rotating element **i = 2** corresponds to the rotating element 120 and comprises a first end 121, comprising a profile $P_2$ and a centre of rotation $O_2$, and a second end 121', comprising a profile $P'_2$ and a centre of rotation $O'_2$ ;
- the rotating element **i = 3** corresponds to the rotating element 130 and comprises a first end 131, comprising a profile $P_3$ and a centre of rotation $O_3$, and a second end 131', comprising a profile $P'_3$ and a centre of rotation $O'_3$ ;
- the elongated element 140 has a first end 141 comprising a profile $P_4$ and a centre of rotation $O_4$.

In particular, the frame 105, the rotating elements 110,120,130 and the elongated element 140 are arranged on parallel planes in an alternating manner.

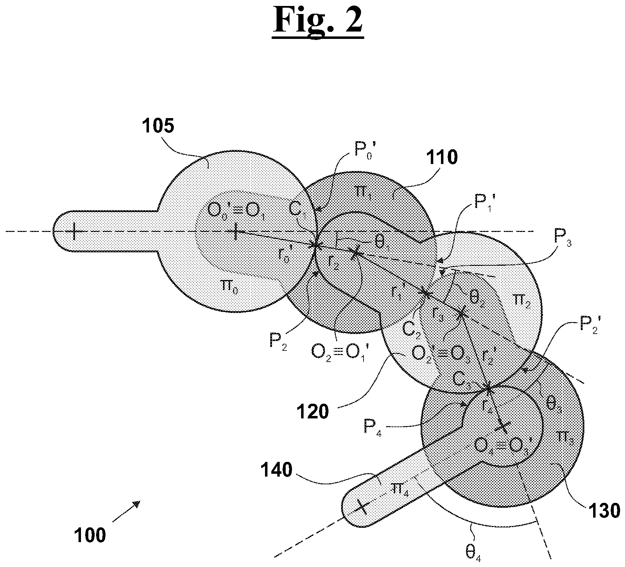

To show the arrangement on parallel planes of the elements of the module 100, in Figs. 1 and 2 the frame 105, the rotating element 120 and the elongated element 140 are partially transparent and show the rotating elements 110 and 130 arranged in the underlying plane.

In particular, the reference plane $\pi_0$, passing through the centre of rotation $O'_0$ of the frame 105, is coplanar to the plane $\pi_2$, passing through the centres of rotation $O_2$ and $O'_2$ of the rotating element 120, and to the plane $\pi_4$, passing through the centre of rotation $O_4$ of the elongated element 140. Similarly, the plane $\pi_1$, passing through the centres of rotation $O_1$ and $O'_1$ of the rotating element 110, is coplanar to the plane $\pi_3$, passing through the centres of rotation $O_3$ and $O'_3$ of the rotating element 130, and both planes $\pi_1$ and $\pi_3$ are parallel to the planes $\pi_0$, $\pi_2$ and $\pi_4$.

Furthermore, the kinematic module 100 is configured in such a way that the rotating element 110 is constrained to make a relative rotation $\vartheta_1$ with respect to the frame 105 about an axis passing through the centres of rotation $O_1$ and $O'_0$ , overlapped to each other and arranged, respectively, on the parallel planes $\pi_1$ and $\pi_0$. This way, the relative rotation $\vartheta_1$ lies in the reference plane $\pi_1$.

Similarly, the rotating element 120 is constrained to carry out, in the reference plane $\pi_2$, a relative rotation $\vartheta_2$ with respect to the rotating element 110 about an axis passing through the centres of rotation $O_2$ and $O'_1$ , while the rotating element 130 is constrained to carry out, in the reference plane $\pi_3$, a relative rotation $\vartheta_3$ with respect to the rotating element 120 about an axis passing through the centres of rotation $O_3$ and $O'_2$ , and the elongated element 140 is constrained to carry out, in the reference plane $\pi_4$, a relative rotation $\vartheta_4$ with respect to the rotating element 130 about an axis passing through the centres of rotation $O_4$ and $O'_3$ .

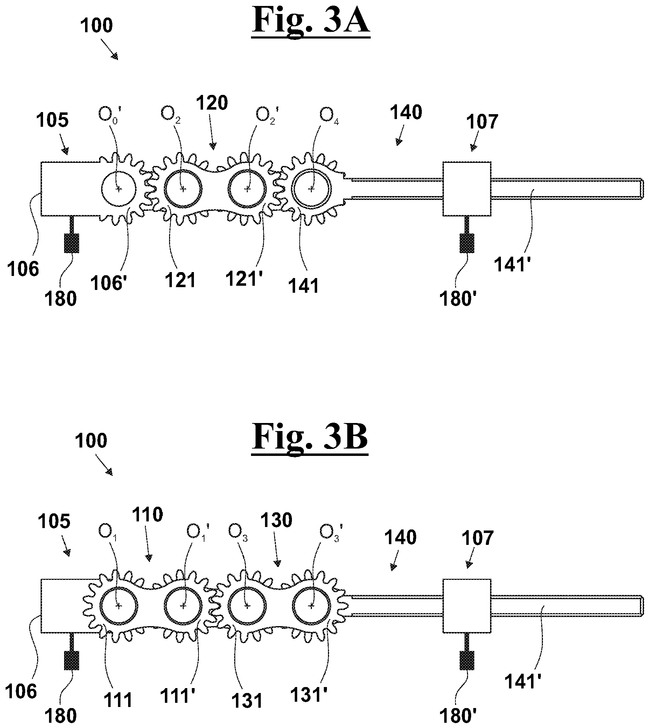

Furthermore, the profiles $P'_0$ , $P_i$, $P'_i$ and $P_{n+1}$ are suitably in contact to each other at points $C_1$, $C_2$ and $C_3$. Such contact can generate a friction constraint which is adapted to transmit a pure rolling motion, as in the case of Figs. 1 and 2, or can be a contact between toothed profiles, as in the case of Figs. 3A to 9.

In both cases, the distance between the various centres of rotation $O'_0$ , $O_i$, $O'_i$ and $O_{n+1}$ and the respective points of contact $C_1$, $C_2$ and $C_3$ between elements of the module 100 are defined by the general relations:

$$O'_0 O_2 = O_1 O'_1 = r'_0 + r_2$$

$$O'_i O_{i+2} = O_{i+1} O'_{i+1} = r'_i + r_{i+2} = r_{i+1} + r'_{i+1}$$

where $r'_0 = O'_0 C_1$ ; $r_2 = O_2 C_1$; $r'_i = O'_i C_{i+1}$ ; $r_i = O_i C_{i-1}$

In particular, in the case shown of **n = 3,** we have:

$$O'_0 O_2 = O_1 O'_1 = r'_0 + r_2$$

$$O'_1 O_3 = O_2 O'_2 = r'_1 + r_3 = r_2 + r'_2$$

$$O'_2 O_4 = O_3 O'_3 = r'_2 + r_4 = r_3 + r'_3$$

where $r'_0 = O'_0 C_1$ ; $r_2 = O_2 C_1$; $r'_1 = O'_1 C_2$ ; $r_3 = O_3 C_2$; $r'_2 = O'_2 C_3$ ; $r_4 = O_4 C_3$

If the profiles $P'_0$ , **$P_i$**, $P'_i$ and **$P_{n+1}$** are circular toothed profiles having centres of curvature coincident with said respective centres of rotation $O'_0$ , **$O_i$**, $O'_i$ and **$O_{n+1}$**, the quantities $r'_0$ , **$r_i$**, $r'_i$ and **$r_{n+1}$** are the pitch radiuses of such circular toothed profiles.

In all an embodiments shown, the contact at points **$C_1$**, **$C_2$** and **$C_3$** is adapted to transmit a rotational movement without slipping between the frame 105, the rotating elements 110,120,130 and the elongated element 140, verifying the equation:

$$\vartheta_{i+1} = \vartheta_i * \left( \frac{r'_{i-1}}{r_{i+1}} \right)$$

with **i = 1,...,n.**

Therefore, in the case **n = 3** we have:

$$\vartheta_2 = \vartheta_1 * \left( \frac{r'_0}{r_2} \right)$$

$$\vartheta_3 = \vartheta_2 * \left( \frac{r'_1}{r_3} \right)$$

$$\vartheta_4 = \vartheta_3 * \left( \frac{r'_2}{r_4} \right)$$

This equation constrains the relative angles between the various elements of the kinematic chain, allowing to operate a single rotation to move all the elements of the chain in a predetermined manner.

In particular, in the case of Fig. 1 and of Figs. 3A to 9, the elements are in such a way that have $r'_0 = r_2 = r'_1 = r_3 = r'_2 = r_4$ and therefore $\vartheta_1 = \vartheta_2 = \vartheta_3 = \vartheta_4$.

In Fig. 2 is shown instead an embodiment in which $r'_0 = r'_1 = r'_2 = 2r_2 = 2r_3 = 2r_4$ implying the relations:

$$\vartheta_2 = 2\vartheta_1$$

$$\vartheta_3 = 2\vartheta_2$$

$$\vartheta_4 = 2\vartheta_3$$

The embodiment of Fig. 2 allows to have a constant angular increase in the rotation of the various elements of the module 100, allowing to reach, with the same elements of the module and with the same value of $\vartheta_1$, a relative angle between the elongated element 140 and the frame 105 greater than the embodiment of Fig. 1.

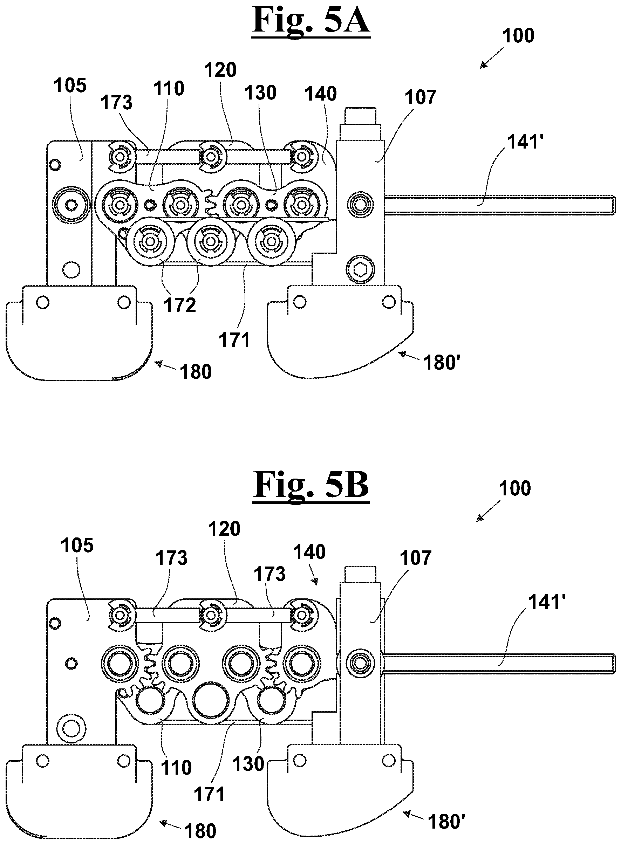

With reference to Figs. 5A and 5B, in an application embodiment of the present invention, the kinematic module 100 further comprises an actuation system comprising a cable 171 and three pulleys 172 suitable for generating the relative rotations $\vartheta_1$, $\vartheta_2$, $\vartheta_3$ and $\vartheta_4$.

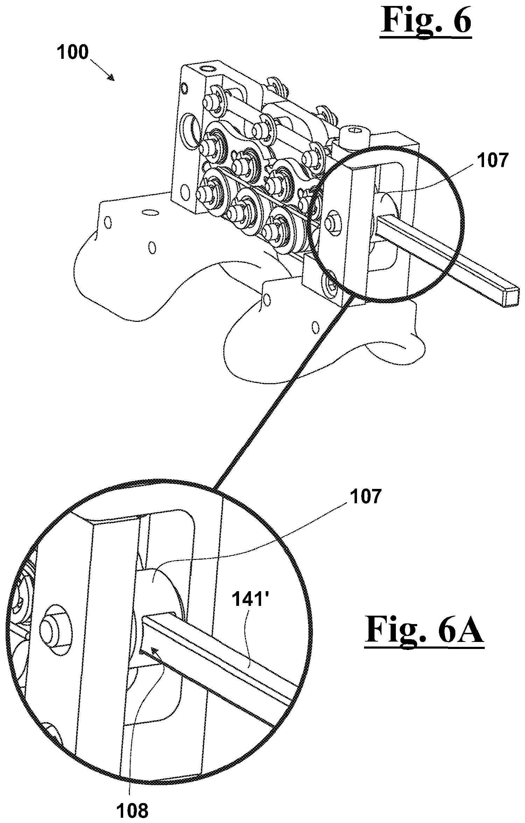

Furthermore, as shown in Figs. 6 and 6A, this exemplary embodiment provides a constraint of roto-translation between the second end 141' of the elongated element and the end element 107. This way, the kinematic module 100 can follow with higher precision the movement of the anatomical joint of the articulation during the rotation.

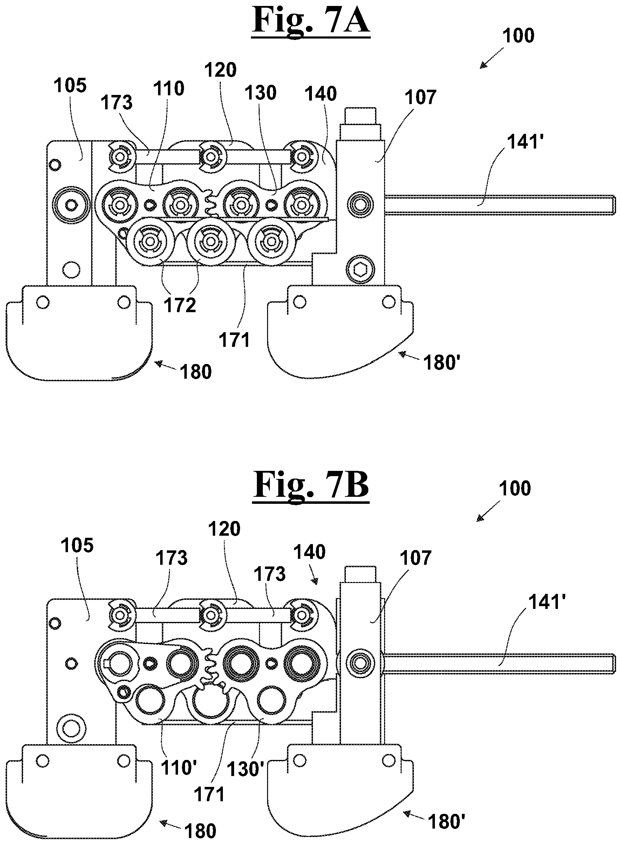

Figs. 7a and 7b show a possible embodiment of the module 100, wherein redundancy rotating elements 110' and 130' are provided on the opposite side with respect to the rotating elements 110 and 130. In this way, there is a greater structural solidity of the cinematic chain.

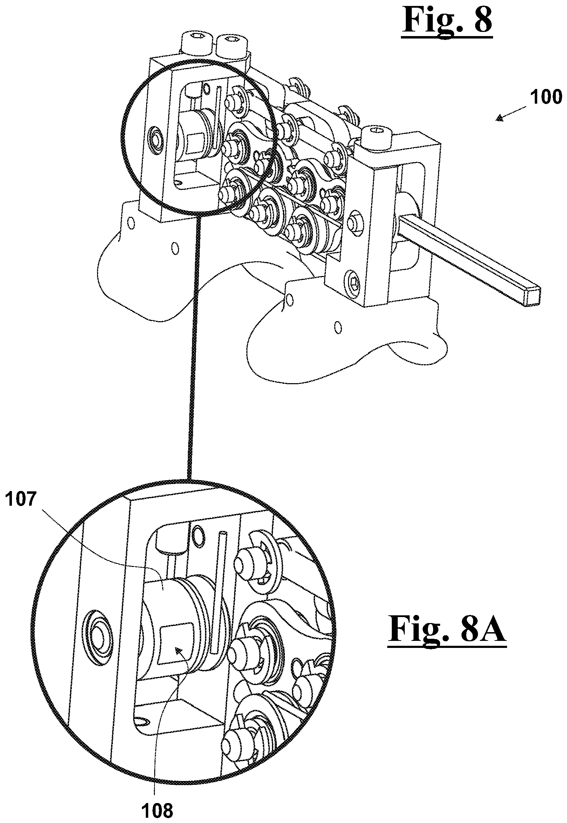

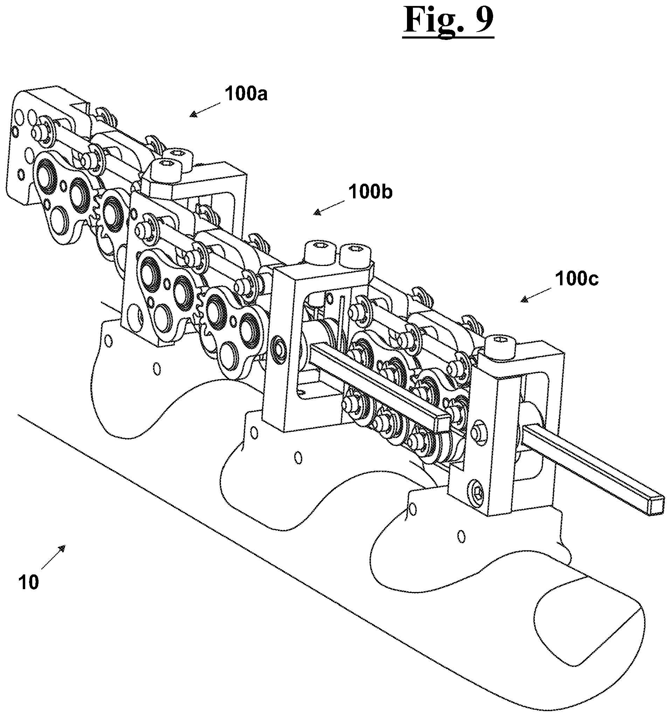

Fig. 9 shows an embodiment of the kinematic chain 10, wherein three modules kinematic 100a, 100b and 100c are placed in series, by the coupling system shown in Figs. 8 and 8A. This coupling system provides that a terminal element 107 of a first module 100a is made integral with the frame 105 of a second module 100b and so on. In this way, between the modules placed in series there is a roto-translation constraint that allows to follow with greater precision the movement of the anatomical joints during the movement of the polyarticular segment, such as for example a flexion-extension of a finger of a hand.

## Claims

1. A kinematic chain (10) for assisting the movement of an anatomical articulation comprising at least one kinematic module (100,100a,100b,100c) comprising:

   - a frame (105) having a first end (106) and a second end (106') comprising a profile $P'_0$ and a centre of rotation $O'_0$, said frame (105) having a reference plane $\pi_0$ passing through said centre of rotation $O'_0$, said frame (105) comprising a first engaging portion (180) arranged to be connected to a proximal anatomical portion with respect to said articulation;
   - a number $n$ of rotating elements (110, 120, 130), defined with index $i = 1, ...,n$, each i-th rotating element having a first end (111, 121, 131), comprising a profile $P_i$ and a centre of rotation $O_i$, and a second end (111', 121', 131'), comprising a profile $P'_i$ and a centre of rotation $O'_i$, each $i$-th rotating element having a reference plane $\pi_i$ passing through said centres of rotation $O_i$ and $O'_i$;
   - an elongated element (140) having a first end (141) comprising a profile $P_{n+1}$ and a centre of rotation $O_{n+1}$, said elongated element (140) being constrained at one end element (107) comprising a second engaging portion (180') arranged to be connected to a distal anatomical portion with respect to said articulation;

   wherein said kinematic chain (10) is configured in such a way that:

   - said reference plane $\pi_0$ is parallel to a reference plane $\pi_1$ and coplanar to a reference plane $\pi_2$;
   - for $i = 1,...,n$ each reference plane $\pi_i$ is parallel to a reference plane $\pi_{i+1}$ and coplanar to a reference plane $\pi_{i+2}$;
   - the rotating element $i = 1$ is constrained to make a relative rotation $\vartheta_1$ with respect to said frame (105) about an axis passing through the centres of rotation $O_1$ and $O'_0$, said relative rotation $\vartheta_1$ lying on a respective reference plane $\pi_1$;

- for $i = 1, ...,n$ each rotating element $i + 1$ is constrained to make a relative rotation $\vartheta_{i+1}$ with respect to a rotating element $i$ about an axis passing through the centres of rotation $O_{i+1}$ and $O'_i$ , said relative rotation $\vartheta_{i+1}$ lying on a respective reference plane $\pi_{i+1}$;

- said profile $P'_0$ contacts a profile $P_2$ at a point $C_1$ in such a way that $O'_0 O_2 = O_1 O'_1 = r'_0 + r_2$ , where $r'_0 = O'_0 C_1$ and $r_2 = O_2 C_1$ ;

- for $i = 1,...,n - 1$ each profile $P'_i$ contacts a profile $P_{i+2}$ at a point $C_{i+1}$ in such a way that $O'_i O_{i+2} = O_{i+1} O'_{i+1} = r'_i + r_{i+2} = r_{i+1} + r'_{i+1}$ , where $r'_i = O'_i C_{i+1}$ and $r_i = O_i C_{i-1}$, $r_1$ excluded;

**and in that** said contact between profiles $P'_0$ , $P_i$, $P'_i$ and $P_{n+1}$ allows a transmission of a rotational movement without slipping between said frame (105), said rotating elements (110, 120, 130) and said elongated element (140), verifying the equation:

$$\vartheta_{i+1} = \vartheta_i * \left( \frac{r'_{i-1}}{r_{i+1}} \right)$$

with $i = 1, ...,n$.

2. The kinematic chain (10), according to claim 1, wherein said profiles $P'_0$ , $P_i$, $P'_i$ and $P_{n+1}$, $P_1$ excluded, are circular toothed profiles having centres of curvature coincident with said respective centres of rotation $O'_0$ , $O_i$, $O'_i$ and $O_{n+1}$ and having pitch radiuses $r'_0$ , $r_i$, $r'_i$ and $r_{n+1}$, with $i = 1, ...,n$, and wherein said profiles $P'_0$ , $P_i$, $P'_i$ and $P_{n+1}$, $P_1$ excluded, are adapted to mesh to each other for transmitting said rotational movement without slipping.

3. The kinematic chain (10), according to claim 1, wherein said profiles $P'_0$ , $P_i$, $P'_i$ and $P_{n+1}$, $P_1$ excluded, are arcs of circumference having centres of curvature coincident with said respective centres of rotation $O'_0$ , $O_i$, $O'_i$ and $O_{n+1}$ and having radiuses of curvature $r'_0$ , $r_i$, $r'_i$ and $r_{n+1}$, with $i = 1,...,n$, and wherein said profiles $P'_0$ , $P_i$, $P'_i$ and $P_{n+1}$, $P_1$ excluded, have a frictional contact constraint for transmitting said rotational movement without slipping.

4. The kinematic chain (10), according to any of claims from 1 to 3, wherein $r'_0 = r'_1$ and $r'_0 = r_i = r'_i$ for $i = 2, ...,n$, obtaining $r'_{i-1} = r_{i+1}$ and $\vartheta_{i+1} = \vartheta_i$.

5. The kinematic chain (10), according to any of claims from 1 to 3, wherein $r'_0 = r'_1$ and $r'_0 = r'_i$ and $r_i < r'_i$ , for $i = 2, ...,n$, obtaining $r'_{i-1} > r_{i+1}$ and $\vartheta_{i+1} > \vartheta_i$.

6. The kinematic chain (10), according to any of claims from 1 to 3, wherein said elongated element (140) is constrained to said end element (107) by a constraint of roto-translation.

7. The kinematic chain (10), according to claim 6, wherein **n = 1.**

8. The kinematic chain (10), according to any of claims from 1 to 3, wherein **n ≥ 3.**

9. The kinematic chain (10), according to any of claims from 1 to 3, wherein said or each kinematic module (100,100a,100b,100c) comprises an actuating system comprising at least one cable (171) and at least one pulley (172) adapted to generate said relative rotation $\vartheta_1$ and/or said or each relative rotation $\vartheta_{i+1}$ for actuating said kinematic chain (10).

10. The kinematic chain (10), according to any of claims from 1 to 3, wherein said or each kinematic module (100,100a,100b,100c) comprises an actuating system comprising at least one spring (173) arranged to contrast said relative rotation $\vartheta_1$ and/or said or each relative rotation $\vartheta_{i+1}$.

11. The kinematic chain (10), according to any of claims from 1 to 3, wherein at least one first kinematic module (100a) and a second kinematic module (100b) in series are provided and wherein an end element (107a) of said first kinematic module (100a) is pivotally constrained to a frame (105b) of said second kinematic module (100b) .

**Patentansprüche**

1. Kinematische Kette (10) zum Unterstützen der Bewegung einer anatomischen Artikulation, umfassend mindestens ein kinematisches Modul (100,100a,100b,100c), umfassend:

- einen Rahmen (105) mit einem ersten Ende (106) und einem zweiten Ende (106'), das ein Profil $P'_0$ und ein Rotationszentrum $O'_0$ umfasst, wobei der Rahmen (105) eine Referenzebene $\pi_0$ aufweist, die durch das Rotationszentrum $O'_0$ verläuft, wobei der Rahmen (105) einen ersten Eingriffsabschnitt (180) umfasst, der so angeordnet ist, dass er mit einem proximalen anatomischen Abschnitt in Bezug auf die Artikulation verbunden werden kann;
- eine Anzahl **n** rotierender Elemente (110, 120, 130), die mit einem Index **i = 1, ..., n** definiert sind, wobei jedes i-te rotierende Element ein erstes Ende (111, 121, 131), das ein Profil $P_i$ und ein Rotationszentrum $O_i$ umfasst, und ein zweites Ende (111', 121', 131'), das ein Profil $P'_i$ und ein Rotationszentrum $O'_i$ umfasst, aufweist, wobei jedes **i**-te rotierende Element eine Referenzebene $\pi_i$ aufweist, die durch die Rotationszentren $O_i$ und $O'_i$ verläuft;
- ein längliches Element (140) mit einem ersten Ende (141), das ein Profil $P_{n+1}$ und ein Rotationszentrum $O_{n+1}$, umfasst, wobei das längliche Element (140) an ein Endelement (107) gebunden ist, das einen zweiten Eingriffsabschnitt (180') umfasst, der so angeordnet ist, dass er mit einem distalen anatomischen Abschnitt in Bezug auf die Artikulation verbunden werden kann;

wobei
die kinematische Kette (10) auf derartige Weise konfiguriert ist, dass:

- die Referenzebene $\pi_0$ parallel zu einer Referenzebene $\pi_1$, und komplanar zu einer Referenzebene $\pi_2$ ist;
- für **i = 1, ...,n** jede Referenzebene $\pi_i$ parallel zu einer Referenzebene $\pi_{i+1}$ und komplanar zu einer Referenzebene $\pi_{i+2}$ ist;
- das rotierende Element **i = 1** so gebunden ist, dass es eine relative Rotation $\vartheta_1$ in Bezug auf den Rahmen (105) um eine Achse ausführt, die durch die Rotationszentren $O_1$ und $O'_0$ verläuft, wobei die relative Rotation $\vartheta_1$ auf einer jeweiligen Referenzebene $\pi_1$ liegt;
- für **i = 1, ...,n** jedes rotierende Element **i + 1** so gebunden ist, dass es eine relative Rotation $\vartheta_{i+1}$ in Bezug auf ein rotierendes Element **i** um eine Achse ausführt, die durch die Rotationszentren $O_{i+1}$ und $O'_i$ verläuft, wobei die relative Rotation $\vartheta_{i+1}$ auf einer jeweiligen Referenzebene $\pi_{i+1}$ liegt;

- das Profil $P'_0$ ein Profil $P_2$ an einem Punkt $C_1$ auf derartige Weise kontaktiert, dass

$$O'_0 O_2 = O_1 O'_1 = r'_0 + r_2$$, wobei $r'_0 = O'_0 C_1$ und $r_2 = O_2 C_1$ ;

- für $i = 1, ..., n - 1$ jedes Profil $P'_i$ ein Profil $P_{i+2}$ an einem Punkt $C_{i+1}$ auf derartige Weise kontaktiert, dass

$$O'_i O_{i+2} = O_{i+1} O'_{i+1} = r'_i + r_{i+2} = r_{i+1} + r'_{i+1}$$, wobei $r'_i = O'_i C_{i+1}$ und $r_i = O_i C_{i-1}$ , $r_1$ ausgenommen;

und dadurch, dass der Kontakt zwischen den Profilen $P'_0$, $P_i$, $P'_i$ und $P_{n+1}$ eine Übertragung einer Rotationsbewegung ohne Schlupf zwischen dem Rahmen (105), den rotierenden Elementen (110, 120, 130) und dem länglichen Element (140) erlaubt, wodurch die folgende Gleichung verifiziert wird:

$$\vartheta_{i+1} = \vartheta_i * \left( \frac{r'_{i-1}}{r_{i+1}} \right)$$

wobei $i = 1, ..., n$.

2. Kinematische Kette (10) nach Anspruch 1, wobei die Profile $P'_0$, $P_i$, $P'_i$ und $P_{n+1}$, $P_1$ ausgenommen, kreisförmige Zahnprofile sind, die Krümmungszentren aufweisen, die mit den jeweiligen Rotationszentren $O'_0$, $O_i$, $O'_i$ und $O_{n+1}$ zusammenfallen, und Teilungsradien $r'_0$, $r_i$, $r'_i$ und $r_{n+1}$ aufweisen, wobei $i = 1, ..., n$, und wobei die Profile $P'_0$, $P_i$, $P'_i$ und $P_{n+1}$, $P_1$ ausgenommen, dazu ausgelegt sind, zum Übertragen der Rotationsbewegung ohne Schlupf ineinanderzugreifen.

3. Kinematische Kette (10) nach Anspruch 1, wobei die Profile $P'_0$, $P_i$, $P'_i$ und $P_{n+1}$, $P_1$ ausgenommen, Umfangsbögen sind, die Krümmungszentren aufweisen, die mit den jeweiligen Rotationszentren $O'_0$, $O_i$, $O'_i$ und $O_{n+1}$ zusammenfallen, und Teilungsradien $r'_0$, $r_i$, $r'_i$ und $r_{n+1}$ aufweisen, wobei $i = 1, ..., n$, und wobei die Profile $P'_0$, $P_i$, $P'_i$ und $P_{n+1}$, $P_1$ ausgenommen, eine Reibkontaktbindung zum Übertragen der Rotationsbewegung ohne Schlupf aufweisen.

4. Kinematische Kette (10) nach einem der Ansprüche 1 bis 3, wobei $r'_0 = r'_1$ und $r'_0 = r_i = r'_i$ für $i = 2, ..., n$, wodurch $r'_{i-1} = r_{i+1}$ und $\vartheta_{i+1} = \vartheta_i$ erlangt werden.

5. Kinematische Kette (10) nach einem der Ansprüche 1 bis 3, wobei $r'_0 = r'_1$ und $r'_0 = r'_i$ und $r_i < r'_i$ für $i = 2, ..., n$, wodurch $r'_{i-1} > r_{i+1}$ und $\vartheta_{i+1} > \vartheta_i$ erlangt werden.

6. Kinematische Kette (10) nach einem der Ansprüche 1 bis 3, wobei das längliche Element (140) durch eine Rototranslationsbindung an das Endelement (107) gebunden ist.

7. Kinematische Kette (10) nach Anspruch 6, wobei $n = 1$.

8. Kinematische Kette (10) nach einem der Ansprüche 1 bis 3, wobei $n \geq 3$.

9. Kinematische Kette (10) nach einem der Ansprüche 1 bis 3, wobei das oder jedes kinematische Modul (100,100a,100b,100c) ein Betätigungssystem umfasst, das mindestens ein Kabel (171) und mindestens eine Riemenscheibe (172) umfasst, die dazu ausgelegt sind, die relative Rotation $\vartheta_1$ und/oder die oder jede relative Rotation $\vartheta_{i+1}$ zum Betätigen der kinematischen Kette (10) zu erzeugen.

10. Kinematische Kette (10) nach einem der Ansprüche 1 bis 3, wobei das oder jedes kinematische Modul (100,100a,100b,100c) ein Betätigungssystem umfasst, das mindestens eine Feder (173) umfasst, die so angeordnet ist, dass die relative Rotation $\vartheta_1$, und/oder die oder jede relative Rotation $\vartheta_{i+1}$ kontrastiert werden.

11. Kinematische Kette (10) nach einem der Ansprüche 1 bis 3, wobei mindestens ein erstes kinematisches Modul (100a) und ein zweites kinematisches Modul (100b) in Reihe bereitgestellt sind und wobei ein Endelement (107a) des ersten kinematischen Moduls (100a) schwenkbar an einen Rahmen (105b) des zweiten kinematischen Moduls (100b) gebunden ist.

**Revendications**

1. Chaîne cinématique (10) permettant d'assister le mouvement d'une articulation anatomique comprenant au moins un module cinématique (100, 100a, 100b, 100c) comprenant :

    - un cadre (105) comportant une première extrémité (106) et une seconde extrémité (106') comprenant un profil $P'_0$ et un centre de rotation $O'_0$ , ledit cadre (105) comportant un plan de référence $\pi_0$ passant par ledit centre de rotation $O'_0$ , ledit cadre (105) comprenant une première partie d'engagement (180) agencée pour être reliée à une partie anatomique proximale par rapport à ladite articulation ;
    - un nombre $n$ d'éléments rotatifs (110, 120, 130), défini avec l'indice $i = 1,...,n$, chaque i-ème élément rotatif comportant une première extrémité (111, 121, 131), comprenant un profil $P_i$ et un centre de rotation $O_i$, et une seconde extrémité (111' , 121', 131 '), comprenant un profil $P'_i$ et un centre de rotation $O'_i$ , chaque $i$-ème élément rotatif comportant un plan de référence $\pi_i$ passant par lesdits centres de rotation $O_i$ et $O'_i$ ;
    - un élément allongé (140) comportant une première extrémité (141) comprenant un profil $P_{n+1}$ et un centre de rotation $O_{n+1}$, ledit élément allongé (140) étant contraint au niveau d'un élément d'extrémité (107) comprenant une seconde partie d'engagement (180') agencée pour être reliée à une partie anatomique distale par rapport à ladite articulation ;

    ladite chaîne cinématique (10) étant configurée de manière à ce que :

    - ledit plan de référence $\pi_0$ soit parallèle à un plan de référence $\pi_1$ et coplanaire à un plan de référence $\pi_2$;
    - pour $i = 1,...,n$ chaque plan de référence $\pi_i$ soit parallèle à un plan de référence $\pi_{i+1}$ et coplanaire à un plan de référence $\pi_{i+2}$;
    - l'élément rotatif $i = 1$ soit contraint d'effectuer une rotation relative $\vartheta_1$ par rapport audit cadre (105) autour d'un axe passant par les centres de rotation $O_1$ et $O'_0$ , ladite rotation relative $\vartheta_1$ s'étendant sur un plan de référence respectif $\pi_1$;
    - pour $i = 1,...,n$ chaque élément rotatif $i + 1$ soit contraint d'effectuer une rotation relative $\vartheta_{i+1}$ par rapport à un élément rotatif $i$ autour d'un axe passant par les centres de rotation $O_{i+1}$ et $O'_i$ , ladite rotation relative $\vartheta_{i+1}$ s'étendant sur un plan de référence $\pi_{i+1}$;

    - ledit profil $P'_0$ étant en contact avec un profil $P_2$ en un point $C_1$ de sorte que $O'_0 O_2 = O_1 O'_1 = r'_0 + r_2$
    , où $r'_0 = O'_0 C_1$ et $r_2 = O_2 C_1$ ;

- pour **i = 1, ..., n - 1** chaque profil $P'_i$ est en contact avec un profil $P_{i+2}$ en un point $C_{i+1}$ de sorte que

$$O'_i O_{i+2} = O_{i+1} O'_{i+1} = r'_i + r_{i+2} = r_{i+1} + r'_{i+1}$$ , où $r'_i = O'_i C_{i+1}$ et $r_i = O_i C_{i-1}$, $r_1$ exclu ;

**et en ce que** ledit contact entre les profils $P'_0$ , $P_i$, $P'_i$ et $P_{n+1}$ permet la transmission d'un mouvement de rotation sans glissement entre ledit cadre (105), lesdits éléments rotatifs (110, 120, 130) et ledit élément allongé (140), vérifiant l'équation :

$$\vartheta_{i+1} = \vartheta_i * \left(\frac{r'_{i-1}}{r_{i+1}}\right)$$

avec **i = 1, ..., n.**

2. Chaîne cinématique (10), selon la revendication 1, lesdits profils $P'_0$ , $P_i$, $P'_i$ et $P_{n+1}$, $P_1$ exclu, étant des profils dentés circulaires comportant des centres de courbure coïncidant avec lesdits centres de rotation respectifs $O'_0$ , $O_i$, $O'_i$ et $O_{n+1}$ et comportant des rayons de pas $r'_0$ , $r_i$, $r'_i$ et $r_{n+1}$, avec **i = 1,...,n**, et lesdits profils $P'_0$ , $P_i$, $P'_i$ et $P_{n+1}$, $P_1$ exclu, étant adaptés pour s'engrener les uns aux autres pour transmettre ledit mouvement de rotation sans glissement.

3. Chaîne cinématique (10), selon la revendication 1, lesdits profils $P'_0$ , $P_i$, $P'_i$ et $P_{n+1}$, $P_1$ exclu, étant des arcs de circonférence comportant des centres de courbure coïncidant avec lesdits centres de rotation respectifs $O'_0$ , $O_i$, $O'_i$ , et $O_{n+1}$ et comportant les rayons de courbure $r'_0$ , $r_i$, $r'_i$ et $r_{n+1}$, avec **i = 1,...,n**, et lesdits profils $P'_0$ , $P_i$, $P'_i$ et $P_{n+1}$, $P_1$ exclu, comportant une contrainte de contact par frottement pour transmettre ledit mouvement de rotation sans glissement.

4. Chaîne cinématique (10), selon l'une quelconque des revendications 1 à 3, dans laquelle $r'_0 = r'_1$ et $r'_0 = r_i = r'_i$ pour **i = 2,...,n,** obtenant $r'_{i-1} = r_{i+1}$ et $\vartheta_{i+1} = \vartheta_i$.

5. Chaîne cinématique (10), selon l'une quelconque des revendications 1 à 3, dans laquelle $r'_0 = r'_1$ et $r'_0 = r'_i$ et $r_i < r'_i$, pour **i = 2,...,n,** obtenant $r'_{i-1} > r_{i+1}$ et $\vartheta_{i+1} > \vartheta_i$.

6. Chaîne cinématique (10), selon l'une quelconque des revendications 1 à 3, ledit élément allongé (140) étant contraint par rapport audit élément d'extrémité (107) par une contrainte de roto-translation.

7. Chaîne cinématique (10) selon la revendication 6, dans laquelle **n = 1.**

8. Chaîne cinématique (10), selon l'une quelconque des revendications 1 à 3, dans laquelle **n ≥ 3.**

9. Chaîne cinématique (10), selon l'une quelconque des revendications 1 à 3, ledit ou chaque module cinématique (100, 100a, 100b, 100c) comprenant un système d'actionnement comprenant au moins un câble (171) et au moins une poulie (172) adaptés à la génération de ladite rotation relative $\vartheta_1$ et/ou de ladite ou chaque rotation relative $\vartheta_{i+1}$ permettant d'actionner ladite chaîne cinématique (10).

10. Chaîne cinématique (10), selon l'une quelconque des revendications 1 à 3, ledit ou chaque module cinématique (100, 100a, 100b, 100c) comprenant un système d'actionnement comprenant au moins un ressort (173) agencé pour s'opposer à ladite rotation relative $\vartheta_1$ et/ou à ladite ou chaque rotation relative $\vartheta_{i+1}$.

11. Chaîne cinématique (10), selon l'une quelconque des revendications 1 à 3, au moins un premier module cinématique (100a) et un second module cinématique (100b) en série étant pourvus et un élément d'extrémité (107a) dudit premier module cinématique (100a) étant contraint de manière pivotante par rapport à un cadre (105b) dudit second module cinématique (100b).

# Fig. 1

# Fig. 2

## Fig. 3A

## Fig. 3B

**Fig. 4**

## Fig. 5A

## Fig. 5B

**Fig. 6**

100

107

107

141'

**Fig. 6A**

108

# Fig. 7A

# Fig. 7B

## Fig. 8

100

107

108

## Fig. 8A

# Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014033613 A
- EP 0090054 A1
- US 5437490 A